(19) **Europäisches Patentamt**

**European Patent Office**

**Office européen des brevets**

(11) **EP 0 664 757 B1**

(12) **EUROPEAN PATENT SPECIFICATION**

(45) Date of publication and mention
of the grant of the patent:
**16.08.2000 Bulletin 2000/33**

(51) Int. Cl.⁷: $B64C\ 21/00$, $B64C\ 23/00$

(21) Application number: **93918131.9**

(22) Date of filing: **25.06.1993**

(86) International application number:
**PCT/US93/06094**

(87) International publication number:
**WO 94/10032 (11.05.1994 Gazette 1994/11)**

(54) **MULTIPLE ELECTROMAGNETIC TILES FOR BOUNDARY LAYER CONTROL**

MEHRFACH ELEKTROMAGNETSCHE FLIESEN FÜR DIE GRENZSCHICHTKONTROLLE

CARREAUX ELECTROMAGNETIQUES MULTIPLES UTILISES DANS LE CONTROLE DE LA
COUCHE LIMITE DE CORPS AERODYNAMIQUES

(84) Designated Contracting States:
**AT BE CH DE DK ES FR GB GR IE IT LI LU MC NL
PT SE**

(30) Priority: **26.10.1992 US 966390**

(43) Date of publication of application:
**02.08.1995 Bulletin 1995/31**

(73) Proprietor:
**BTG International Inc
Gulph Mills, Pennsylvania 19406 (US)**

(72) Inventors:
• **NOSENCHUCK, Daniel, M.
Mercerville, NJ 08619 (US)**
• **BROWN, Garry, L.
Princeton, NJ 08540 (US)**

(74) Representative:
**Davis, Norman Norbridge
BRITISH TECHNOLOGY GROUP LTD
10 Fleet Place
London EC4M 7SB (GB)**

(56) References cited:
| FR-A- 931 295 | FR-A- 1 031 925 |
|---|---|
| FR-A- 2 091 847 | GB-A- 1 106 531 |
| US-A- 2 946 541 | US-A- 3 162 398 |
| US-A- 3 224 375 | US-A- 3 360 220 |
| US-A- 3 662 554 | US-A- 4 516 747 |

• **DATABASE WPI Week 7633 1976 Derwent
Publications Ltd., London, GB; AN 76-H3378X &
SU-A-491 517 (SHPERLING N G) , 10 February
1976**

## Description

Field of the Invention

The present invention relates to multiple electromagnetic tiles for magnetically controlling the flow of a fluid along a wall and, more particularly, to magnetic control of the boundary layer on aerodynamic bodies (such as wings, rotors and flaps) and hydrodynamic bodies (such as submarine sails, bow-planes, stern appendages and propellers).

Description of the Prior Art

A viscous fluid, and a body completely immersed in the fluid, form a boundary layer at the body's surface when the fluid and the body move relative to each other. That is, the layer of fluid in contact with the body is essentially at rest, while in an area removed from the body, the fluid is moving at its free-stream velocity. The region between the body and that area is known as a boundary layer.

The boundary layer is laminar at low Reynolds' numbers. ($Re = UL/\nu$, where U is a characteristic velocity, such as the free-stream velocity, L is a characteristic dimension of the body, such as the length of a wing chord or boat hull, and $\nu$ is the kinematic viscosity of the fluid.) When the Reynolds' number increases, the boundary layer becomes unstable and turbulent. In some cases, it can "separate" from the body.

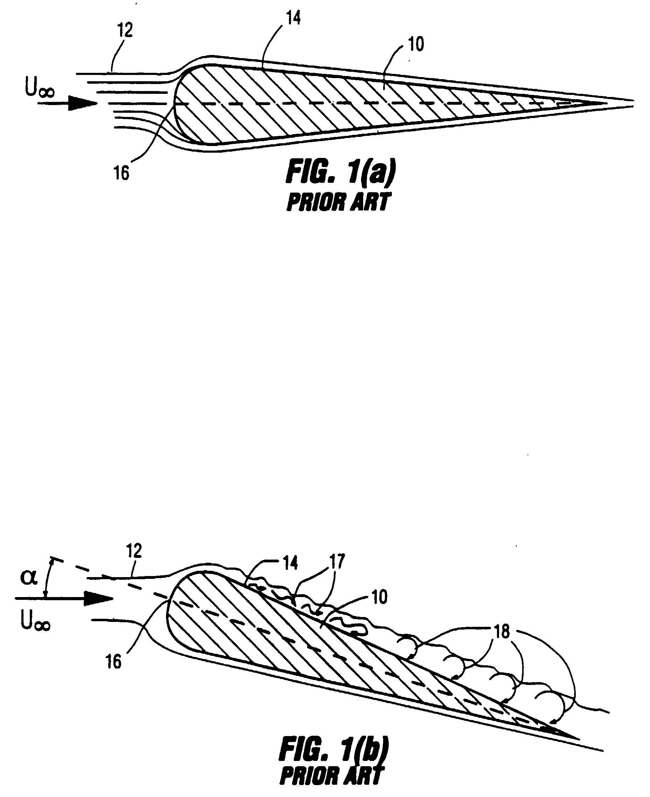

Figs. 1(a) and 1(b) illustrate flow over an airfoil. It will be appreciated that the same principles apply whether the fluid is a liquid or a gas and regardless of the shape of the body.

When the airfoil 10 is operating at a small angle of attack $\alpha$, as shown in Fig. 1(a), the fluid stream 12, with a free-stream velocity $U_\infty$, flow smoothly over the upper surface 14 of the airfoil. The downward deflection of the fluid stream by the airfoil causes an equal and opposite upward lift force to act on the airfoil.

As the angle of attack $\alpha$ increases, as shown in Fig. 1(b), the boundary layer may become turbulent, as indicated by the irregular flow 17. (For purposes of illustration, the boundary layer is depicted in Fig. 1 as much thicker than it is in actuality.) At very high angles of attack the boundary layer may separate from the airfoil, which then stalls. In addition to the loss of lift caused by boundary layer separation, eddies and turbulence 18 develop in the boundary layer.

Instability leading to boundary layer turbulence at a body's surface has several implications.

First, boundary layer turbulence increases viscous drag, which may create the need for additional propulsive force to be applied to the airfoil or other body, which in turn requires more fuel to be expended to maintain the speed of the airplane, submarine, propeller blade, etc., to which the airfoil is attached. Moreover, if the flow separates completely, additional pressure drag is created.

In addition, a turbulent boundary layer exhibits large velocity and pressure fluctuations, which induce noise. Noise can be a significant problem in many environments, one example being submarine control surfaces and propeller screw blades. Pressure fluctuations associated with boundary layer separation can cause vibration, which in turn causes fatigue, which can be a serious problem particularly in metal aircraft parts.

Various approaches have been taken to stabilize boundary layer flow and delay boundary layer separation. One of these approaches includes optimizing the geometry of the airfoil to achieve a maximum possible angle of attack. However, an optimum airfoil shape still only allows the airfoil to operate at limited angles of attack.

Approaches for controlling the boundary layer along a surface of an object have also included providing suction or injection of air through fine slits in the airfoil surface to supply or withdraw energy from the boundary layer. However, in addition to the burden of providing fine slits over the surface of the object, such approaches require extensive tubing networks to supply the force necessary for suction or injection. Accordingly, this approach adds considerably to the overall weight and complexity of the object, which is generally inconsistent with the design objectives of most applications.

The prior art has not yet achieved the capability to provide all of these types of boundary layer control in a very efficient, practical and easily implemented fashion.

US-A-3360220 shows an apparatus for controlling a boundary layer in a flow of a fluid having a predetermined electrical conductivity and moving relative to a surface by generating in the near-wall region of the fluid a magnetic field $\overline{B}$ (x, y, z, t) having flux lines with a predetermined orientation with respect to the direction of relative movement of the fluid and the surface, and by generating in the near-wall region an electric current density traversing the magnetic flux lines, such that said magnetic field and electric current density create force $\overline{L}$ (x, y, z, t) = $\overline{J}$ X $\overline{B}$ in the new-wall region and having a component normal to the surface.

SUMMARY OF THE INVENTION

It is an object of the present invention to control the flow over a body for at least the following purposes:

1. Control of shear stress in the fluid in the boundary layer to reduce shear stress in the fluid at the wall and reduce viscous drag on the body.
2. Control of boundary layer separation to decrease or increase the resulting form (pressure) drag on the body, which also can be used to create forces and moments on the body and thereby provide directional control.

3. Control of the characteristics of the acoustic field in the fluid surrounding the body.

4. Control of heat transfer between the body and the fluid.

5. Control of turbulent fluid mixing in the boundary layer.

6. Control of the characteristics of the pressure field in the fluid surrounding the body and the resulting coupled forces.

Accordingly, the present invention provides an apparatus for controlling a boundary layer in a flow of a fluid having a predetermined electrical conductivity and moving relative to a surface, said surface comprising for example a lifting surface, for example in the form of a control surface, said apparatus comprising:

a plurality of selectively actuable control region tiles distributable over the surface, each said tile being bounded by magnetic field generating means for generating in the near-wall region of the fluid a magnetic field B (x,y,z,t) having flux lines with a predetermined orientation with respect to the direction of relative movement of the fluid and the surface and electric current generating means for generating in the fluid in the near-wall region an electric current density $\bar{J}$ (x,y,z,t) traversing the magnetic flux lines wherein said magnetic field generating means and said electric current generating means are disposed relative to each other such that actuation of a particular tile generates a magnetic field $\bar{B}$ and electric current density $\bar{J}$ that create force $\bar{L}$ (x, y, z, t) = $\bar{J}$ X $\bar{B}$ in the near-wall region of the flow and having a component normal to the surface; and

control means for selectively actuating said tiles to create the force $\bar{L}$ in the flow along selected said tiles for controlling the flow.

BRIEF DESCRIPTION OF THE DRAWINGS

The various aspects of the present invention can be best understood by reference to the detailed description of preferred embodiments set forth below taken with the drawings, in which:

Figs. 1(a) and 1(b) depict fluid flow around an airfoil.

Figs. 2(a) to 2(c) depict boundary layer flow conditions that illustrate principles utilized in the present invention.

Fig. 3(a) is a planform view of a magnetic boundary layer control device with a single control region that illustrates the principles of the present invention and Fig. 3(b) is a cross-section along line B-B of Fig. 3(a).

Fig. 4 depicts a section of the fluid flow shown in Figs. 3(a) and 3(b).

Fig. 5 is a qualitative plot relating to the conductivity of the fluid flow shown in Figs. 3(a) and 3(b).

Fig. 6 shows a one-dimensional array of control region tiles that illustrates one embodiment of the present invention.

Fig. 7 shows a two-dimensional array of control region tiles.

Fig. 8 shows a test setup used to demonstrate the efficacy of an embodiment of the invention using a one-dimensional array of control region tiles like that shown in Fig. 6.

DETAILED DESCRIPTION OF PREFERRED EMBODIMENTS

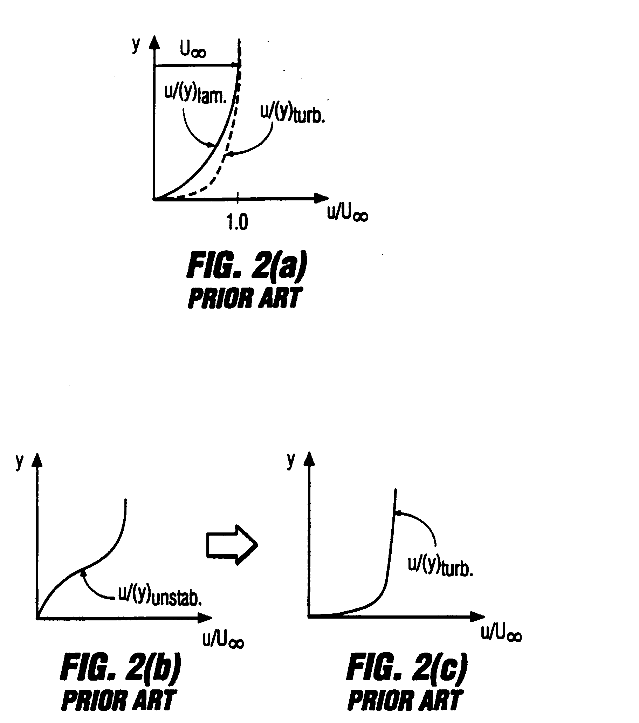

Figs. 2 to 5 illustrate principles underlying the present invention.
Figs. 2(a) to 2(c) illustrate generally accepted principles regarding flow conditions in a boundary layer.
Fig. 2 plots the velocity in a fluid at a wall (y = 0) of a flat plate and in the region of the boundary layer. At y = 0, the velocity u is generally considered to be zero. The velocity increases as y increases, and approaches the free-stream velocity $U_\infty$. The velocity u in the mean-flow direction can thus be expressed as u(y).
The average wall shear stress $\tau_w$ in the mean-flow direction is expressed by the following relation:

$$\tau_w = \mu \left. \frac{\overline{du}}{dy} \right|_{wall} \qquad (1)$$

where $\mu$ is the viscosity of the fluid.
In turn, the wall shear stress is related to viscous drag as follows:

$$D_{viscous} = \int_{wall} \tau_w \, dA \qquad (2)$$

where dA is an elemental area of the wall.
Equations (1) and (2) show that $\tau_w$ and $D_{viscous}$ increase as du/dy at the wall increases.
Fig. 2(a) illustrates u(y) for a laminar boundary layer, shown as a solid line, and u(y) for a turbulent boundary layer, shown in a dotted line, for the same external conditions. It will be appreciated that du/dy at the wall is lower for a laminar boundary than for a turbulent boundary layer at the same location on the wall. Accordingly, viscous drag can be reduced if the flow in the boundary layer can be maintained laminar.
However, instability in the flow in the boundary layer can cause the flow to become turbulent. An illustration of this phenomena is shown in Figs. 2(b) and 2(c).

Fig. 2(b) illustrates the velocity profile in an unstable boundary layer. The velocity of the fluid immediately adjacent the wall begins to slow down and can even approach zero. This is often an unstable condition, which leads to the replacement of the low velocity fluid near the wall by the higher energy (higher velocity) fluid in the free-stream. The boundary layer thus established is generally turbulent, as illustrated in Fig. 2(c). Accordingly, du/dy at the wall is higher than it would have been if the transition to turbulent flow had not occurred.

Turbulence in the boundary layer has implications beyond the resulting increase in viscous drag. For one thing, the turbulent flow in the boundary layer creates noise because velocity fluctuations inherent in turbulent flow produce pressure fluctuations that tend to propagate into the free-stream flow.

The present invention can stabilize the flow in the boundary layer and thus reduce viscous drag and noise. The present invention can also serve the purposes listed above, in ways described in more detail in the course of the following discussion.

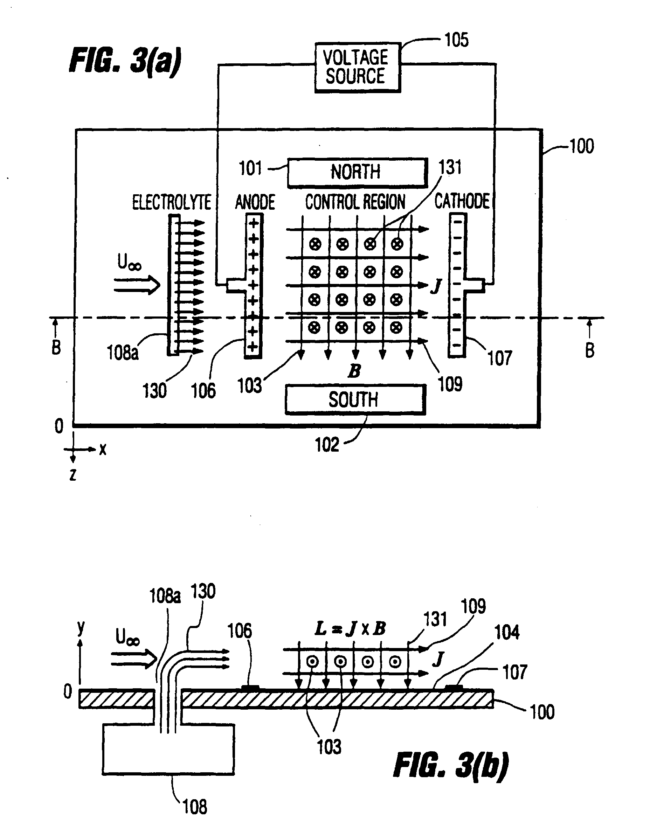

Fig. 3(a) is a planform view of a device illustrating the present invention. A wall or flat plate 100, simulating a wing or a control surface, is provided with a magnet having a North pole 101 and a South pole 102 for generating a magnetic field $\bar{B}$ with flux lines 103. The flux lines 103 enter and exit the surface 104 of the wall, thus being oriented parallel to the wall surface 104 and normal to the free-stream fluid flow direction x. (The coordinate system used herein is shown in Figs. 3(a) and 3(b).)

The magnetic poles 101 and 102 shown in Fig. 3(a) are provided by a horseshoe magnet (not shown) beneath the plate 100 (that is, on the side opposite the surface 104), and the plate is a non-ferrous material that allows free passage of magnetic flux.

However, the magnetic poles can be provided by any suitable structure. For example, the poles of one or more magnets can be placed flush with the surface 104 so as to form a part of the surface itself, and can even protrude from the surface.

A voltage source 105 attached across electrodes 106 and 107 generates an electric current density $\bar{J}$, represented by arrows 109, between the two electrodes. Of course, if the plate 100 is electrically conductive, the electrodes 106 and 107 are insulated from the plate.

To control the boundary layer using the present invention it is highly desirable that the fluid in the boundary layer have a certain degree of electrical conductivity σ different from the conductivity of the rest of the fluid. In the device shown in Figs. 3(a) and 3(b), an electrolyte 130 is added to the boundary layer by bleeding an electrolyte from a reservoir 108 through a slit 108a into the medium to increase the conductivity of a thin layer of the liquid adjacent to the wall.

A direction of the current flow through the conductive fluid is in the direction from an anode electrode 106 to a cathode electrode 107 such that the current density can be expressed as a vector $\bar{J}$ parallel to the mean flow direction x of the fluid medium. As depicted in Fig. 3(b), a Lorentz force $\bar{L}$, represented by arrows 131, resulting from the interposition of the electric current and magnetic field, is expressed as $\bar{J} \times \bar{B}$, the vector- or cross-product of $\bar{J}$ and $\bar{B}$ acting in a control region in a direction normal to and toward the wall 100.

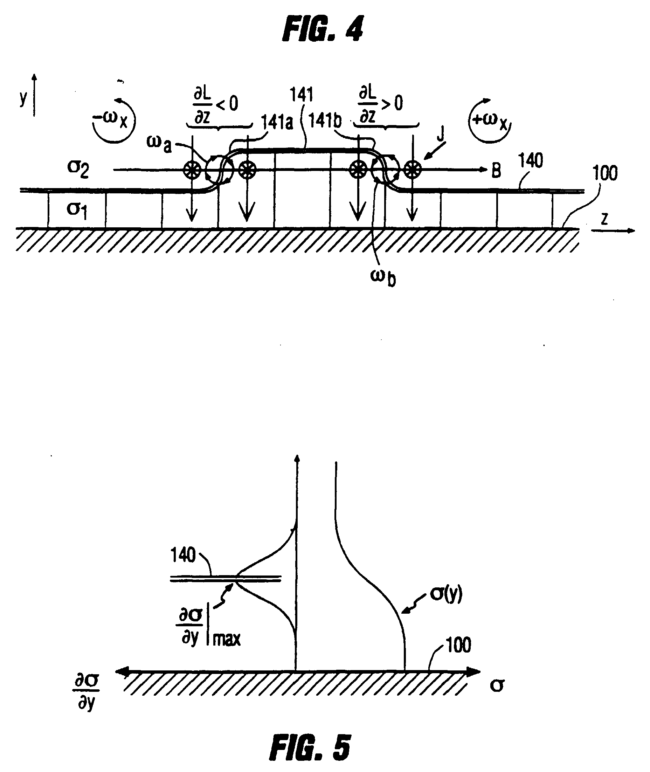

The Lorentz force $\bar{L} = \bar{J} \times \bar{B}$ stabilizes the boundary layer by counteracting regions of positive and negative vorticity ω, in accordance with the mechanism illustrated in Fig. 4.

Fig. 4 is a view looking downstream in the flow along the plate 100 in Figs. 3(a) and 3(b). (That is, a cross-section of the flow in the spanwise (z) direction.) As a result of the introduction of the electrolyte 130, the fluid has a higher conductivity $\sigma_1$ in the near-wall region than the conductivity $\sigma_2$ in regions outside the near-wall region. As those skilled in this art know, the "near-wall" region is that part of the flow in the boundary layer responsible for most of the turbulence production. In the near-wall region, viscous forces predominate over momentum forces.

The double line 140 denotes where the gradient of the conductivity σ in the y-direction is at a maximum in the near-wall region. Optimally, the conditions under which the electrolyte 130 is introduced into the fluid flow are controlled so that the conductivity gradient is at a maximum at a predetermined distance from the wall, in accordance with principles discussed below. In Fig. 5, the right side qualitatively illustrates the conductivity variation in the y direction (y=0 at the surface of plate 100) and the left side plots the conductivity gradient for the conductivity illustrated on the right-hand side. The double line 140 is drawn in Fig. 4 at the distance from the wall where the conductivity gradient is at a maximum, as shown in Fig. 5.

This distance is typically between 10 and 30 wall units ($y^+$), that is, $10 < y^+ < 30$, although it can vary depending on the properties of a particular fluid flow. A "wall unit" is a dimensionless number, usually expressed as $y^+$, used by those skilled in the art to express distance when phenomena being measured relate to the flow conditions along a surface. In particular, the vertical distance from the wall of a flat plate may be expressed as:

$$y^+ = y \, \frac{u_\tau}{\nu} \qquad (3)$$

where ν is the kinematic viscosity of the fluid and

$$u_\tau = \sqrt{\tau_w/\rho},$$

$\tau_w$ being wall shear stress (see Equation 1) and ρ being the density of the fluid.

Referring back to Fig. 4, turbulence in a boundary layer is generally associated with regions of positive and negative vorticity $+\omega$ and $-\omega$. As illustrated in Fig. 4 by the raised portion 141 of the double line, this vorticity is believed to be one of the mechanisms at work in the lift-up of near-wall low-momentum fluid and its replacement by higher momentum fluid from regions further from the wall, that is, the phenomenon explained previously in connection with Figs. 2(a) to 2(c).

While the exact mechanism by which the present invention prevents this lift-up of a near-wall fluid is not completely understood, due to the as yet incomplete understanding of the feedback mechanisms that stimulate the creation of near-wall streamwise vorticity ($+\omega$ and $-\omega$), Fig. 4 illustrates one of the mechanisms believed to be at work. Since the boundary between the low- and high-conductivity fluid is displaced, as seen by the raised portion 141 of the double line in Fig. 4, the Lorentz force $L_y$ superimposed on the flow exhibits a gradient in the areas where that boundary is dislocated.

At the dislocation 141a on the left-hand side, $L_y$ is decreasing in the z-direction, to create streamwise vorticity $\omega_a$ in the positive direction that counteracts the vorticity $-\omega$ that caused the dislocation 141a in the boundary layer. At the right-hand dislocation 141b, $L_y$ is increasing in the z-direction, thus creating streamwise vorticity $\omega_b$ in a negative direction that counteracts the $+\omega$ at that location. The bolder vector for $L_y$ in Fig. 4 indicates a stronger force. Thus, since $L_y$ (which is negative because it is directed in the minus y-direction) becomes larger in the z-direction for the left-hand dislocation 141a, and smaller in the z-direction for the right-hand dislocation 141b, it creates vorticities in the opposite directions from $-\omega$ and $+\omega$, respectively.

The gradient of $L_y$ in the z-direction creates the counteracting vorticities because the near-wall region conductivity $\sigma_1$ is higher than the more remote conductivity $\sigma_2$, and the higher conductivity fluid carries more current. Accordingly, $L_y$ where there is more such fluid, such as where the boundary layer has been lifted up, is larger than in the adjacent areas.

Fig. 4 illustrates how the present invention is believed to counteract flow disturbances in the spanwise (z) direction. It is believed that the invention counteracts disturbances in the streamwise (x) direction in the same manner. That is, a schematic cross-section of the flow taken in the streamwise (x) direction instead of the spanwise (z) direction would look much the same as Fig. 4.

It is preferable that the conductivity gradient be a maximum at the edge of the near-wall region. However, that is not necessary. It is believed to be sufficient simply to have a conductivity gradient in the y-direction in the near-wall region in order to generate the $L_y$ gradients that create vorticity. That is, if $\delta$ is the height of the near-wall region, then there should be a conductivity gradient in the y-direction between $y = 0$ and $y = \delta$, with the maximum gradient preferably being at $y = \delta$.

It will be appreciated that by reversing the polarity of either the magnetic field or the electric current density, the force $\bar{J} \times \bar{B}$ can be provided in a direction normal to but directed away from the wall 100, which will result in the flow medium being pushed in a direction away from the wall surface 104. This effect can be used to disturb and destabilize the boundary layer by creating the dislocating vortices $-\omega$ and $+\omega$.

In the embodiment illustrated in Fig. 3, the current density and the magnetic field are normal to each other. This of course provides a maximum force $\bar{J} \times \bar{B}$ for given magnetic flux density B and current density J. However, it will also be appreciated that the electric current density and the magnetic field need not be perpendicular to each other as shown in these figures. Any arrangement which provides a current and magnetic field traversing each other will result in a force $\bar{J} \times \bar{B}$.

Arrangements besides that depicted in Fig. 3 are also possible in accordance with the present invention. For example, the electrodes could be arranged so that the current flows across the mean fluid flow direction while the magnetic flux lines are along the flow direction. Or the amount of current density and strength of the magnetic field can be varied with time to change that force.

In one of its most general aspects, the present invention provides for varying the magnetic field and current density over the entire control region and with time to provide boundary layer control effects precisely tailored to any particular flow condition. That is, the magnetic field can be expressed as a function $\bar{B}(x,y,z,t)$ and the current density can be expressed as a function $\bar{J}(x,y,z,t)$, so that the resulting force $\bar{L} = \bar{J} \times \bar{B}$ is a function $\bar{L}(x,y,z,t)$. Accordingly, to provide the desired control of the flow around an object it is possible to provide $\bar{B}(x,y,z,t)$ and $\bar{J}(x,y,z,t)$ that will provide the desired flow effects.

Although it may be possible under some circumstances to provide functions $\bar{B}(x,y,z,t)$ and $\bar{J}(x,y,z,t)$ that will produce the proper $L_y$ variations (see Fig. 4), a considerably more expedient manner of producing those variations is by providing a layer of different, preferably higher, conductivity fluid in the near-wall region. Accordingly, another of the general aspects of the present invention involves the provision of such a layer. In such a case, $\bar{B}$ and $\bar{J}$ need not be varied to produce the $L_y$ variations necessary for boundary layer control, although for given desired flow effects $\bar{B}$ and $\bar{J}$ may still be varied spatially and temporally.

The present invention has numerous significant implications. It can reduce viscous drag by stabilizing the boundary layer and preventing transition to turbulent flow. In addition, it can inhibit velocity fluctuations in the near-wall region over a wide area of a flow surface and thereby damp and dissipate velocity fluctuations in the free-stream flow. This can significantly affect the acoustic field in the fluid surrounding the body.

And by stabilizing the boundary layer and preventing transition to turbulent flow, the present invention can reduce heat transfer between the fluid and the body, which is of great potential significance in reducing the temperatures to which space vehicles are subjected upon re-entry into the Earth's atmosphere.

On the other hand, providing $\bar{J} \times \bar{B}$ directed away from the body can destabilize the flow in the boundary layer and induce transition to turbulent flow. In that manner, heat transfer between the fluid and the body can be enhanced, which is important in applications such as heat exchanger design. Moreover, turbulent boundary layer flow enhances fluid mixing, which can have important ramifications in combustion and chemical processing application (where two fluids may flow along opposite surfaces of a body to be mixed at the body's trailing edge). And a turbulent boundary layer is ordinarily less prone to separation than a laminar boundary layer, so that inducing turbulent boundary layer flow can delay separation.

Controlling boundary layer separation is, of course, important because of both the form (pressure) drag and the unstable pressure fluctuations associated with such a flow condition. Separation greatly increases the drag on the body due to the altered distribution of pressure when the flow separates. Accordingly, preventing separation reduces such drag. Separation can also create a fluctuating pressure field in the fluid that subjects the body to coupled forces which can cause fatigue. Delaying separation (by inducing turbulent boundary layer flow) or inhibiting separation (by providing a strong $\bar{J} \times \bar{B}$ force toward the body), can reduce these pressure fluctuations and the resulting fatigue.

By the same token, preventing or inducing separation under controlled conditions can be used to create forces and moments on the body and provide directional control.

The present invention uses those principles to provide efficient boundary layer control over a wide area.

Results of experiments using a single control region indicate that it becomes less capable of providing the desired bounary layer control as the distance between the electrodes, $D_e$, and the distance between the magnetic poles, $D_B$, become larger. The reason lies in the fact that the present invention seeks to control the fluid in the near-wall region of the flow. Accordingly, a certain magnitude magnetic field and electric current density is desired in that region. As $D_B$ and $D_e$ increase, the magnitudes of the magnetic field and current density at the near-wall region actually decrease for a given strength magnet and electric current. Thus, one way to increase the size of the control region while maintaining the same degree of flow control is simply to increase the strength of the magnet or current or both. That approach results in an inefficient use of the magnetic field and current density being generated, since a only a small percentage of each is in the near-wall region contributing to flow control.

However, the present invention enables flow control over a large area while efficiently using the magnetic field and electric current density.

The optimum distances $D_e$ and $D_B$ for maintaining a certain percentage of the magnetic flow and current in the near-wall region can be calculated using Maxwell's equations. If that percentage is chosen as, say, 50%, then Maxwell's equations can be used to show that

$$\frac{D_e}{\delta} \sim \frac{D_B}{\delta} \sim 10. \qquad (4)$$

Since $\delta$ is a small distance, the value of $D_e$ and $D_B$ required to maintain 50% of the magnetic field and electric current within the near-wall region are also very small.

That consideration illustrates the principle underlying the present invention, namely the provision of a plurality of separately actuatable control region tiles. With such an arrangement, flow control over a large area can be provided with less magnetic flux and electric current than would be required to provide flow control for that area using a single control region.

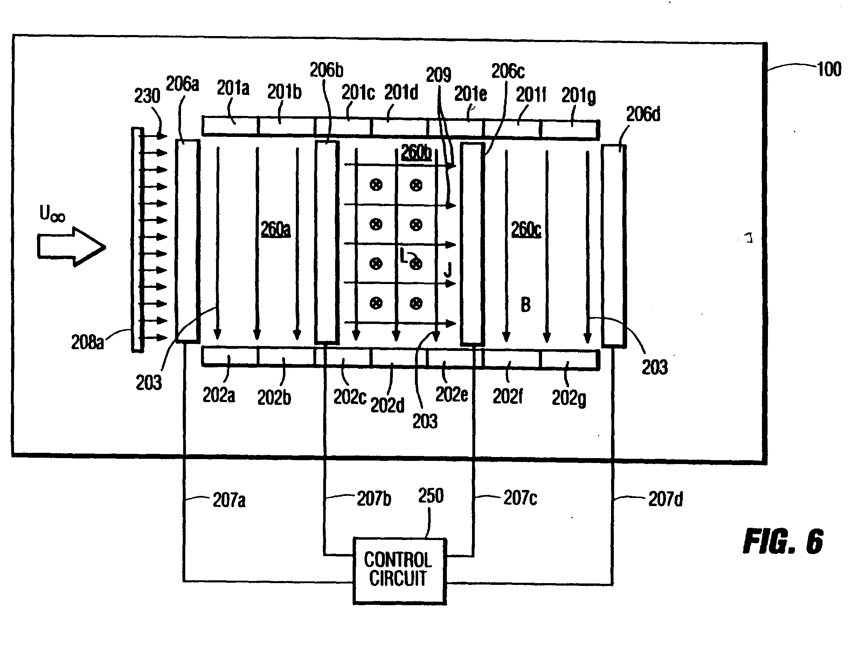

Fig. 6 schematically illustrates the present invention as applied to a one-dimensional array of individual control region tiles.

A wall or flat plate 200, simulating a wing or control surface as in Figs. 3(a) and 3(b), is provided with a series of magnets having North poles 201a, 201b, ..., 201g, and South poles 202a, 202b, ... 202g. These magnets generate a magnetic field $\bar{B}$ with flux lines 203. A plurality of electrodes 206a, 206b, 206c and 206d are spaced from each other to provide three control tiles 260a, 260b, and 260c, disposed in Fig. 6 in a one-dimensional array in the direction of fluid flow. To provide a layer of higher conductivity fluid in the near-wall region, a slot 208a bleeds an electrolyte 230 into the fluid, in a fashion similar to that illustrated in Figs 3(a) and 3(b).

Each electrode 206 is connected to wiring 207 that leads to a control circuit 250. The control circuit is made from known components and is capable of selectively applying a potential across each electrode pair through wiring 207. That is, the control circuit 250 can apply a potential across any pair of electrodes 206a-206b, 206b-206c or 206c-206d in any polarity.

Fig. 6 shows the came where electrodes 206a and 206b are at the same potential, electrodes 206b and 206c are at potentials that make 206b an anode electrode relative to electrode 206c, and electrodes 206c and 206d are at the same potential. In that case, there is an electric current $\bar{J}$ between the electrodes 206b and 206c. This electric current is represented by the vector $\bar{J}$ and arrows 209. Accordingly, a force $\bar{L} = \bar{J} \times \bar{B}$ is generated in the actuated tile 260b.

When any one of the tiles 260a, 260b or 260c is actuated, the flow along that tile is quickly stabilized. However, when the tile is deactuated, it may take a relatively long time for the flow to destabilize. Accordingly, it is possible to actuate the tiles sequentially so that each is actuated for a relatively short length of time, while still maintaining stable flow over all of the tiles.

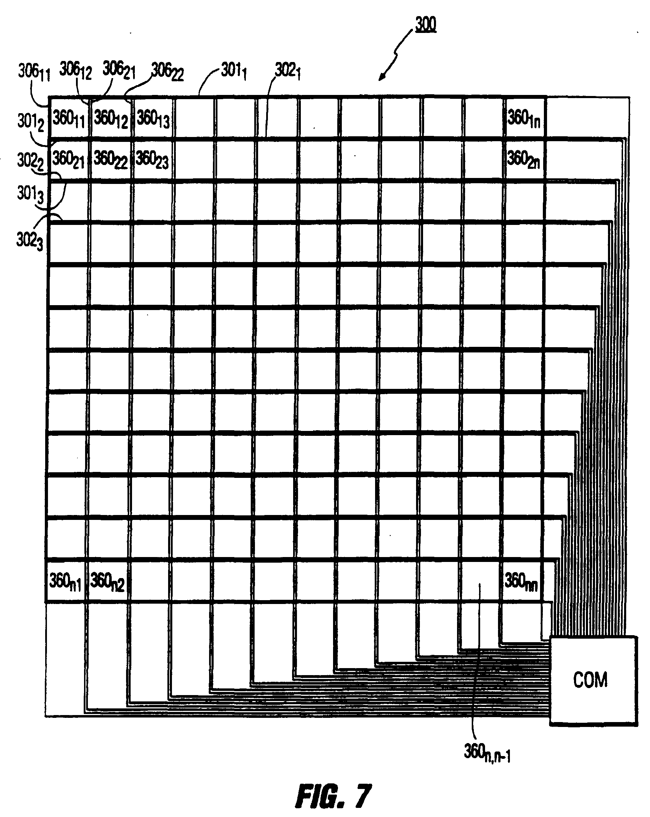

The present invention also contemplates a three-dimensional array 300 of n tiles as shown in Fig. 7. Each tile has associated with it a pair of electrodes and a pair of magnetic poles provided by electromagnets. For example, the first row of tiles $360_{11}$ to $360_{1n}$ has associated with it electromagnets $301_1$, and $302_1$; the second row of tiles $360_{21}$ to $360_{2n}$ has associated with it electromagnets $301_2$ and $302_2$; etc. By the same token, the first column of tiles $360_{11}$ to $360_{n1}$ has associated with it electrodes $306_{11}$ and $306_{12}$; the second column of tiles $360_{12}$ to $360_{n2}$ has associated with it electrodes $306_{12}$ and $306_{22}$; etc.

By suitably addressing the electromagnets and electrodes associated with the tiles, it is possible to provide a high degree of flow control over a large area. Of course, the electrodes and electromagnets must be addressed in a fashion that ensures that no two tiles in close proximity are simultaneously actuated. Otherwise, the magnetic fields and electric currents would not be provided in the proper direction for flow control. For example, the adjacent electrodes in two adjoining tiles could not be made simultaneously to have different polarities, since current would then flow between such electrodes rather than along the tile surface.

A microcomputer COM can be programmed to provide an appropriate addressing sequence depending on flow conditions such as free stream velocity, fluid density, angle of attack (if the array 300 is on a lifting body such as an aircraft wing or submarine control surface), etc.

The present invention enables flow control over a large area, an may reduce the strength of the magnetic field and the electric current required for the same area if only one control region were provided for such area. Under certain flow conditions, the flow over a tile may destabilize very quickly after that tile is deactuated. However, even in those circumstances, the flow stabilization achieved by simultaneously actuating plural, spaced-apart tiles can substantially reduce the shear stress in the fluid at the wall over the entire area covered by the array of tiles.

Example

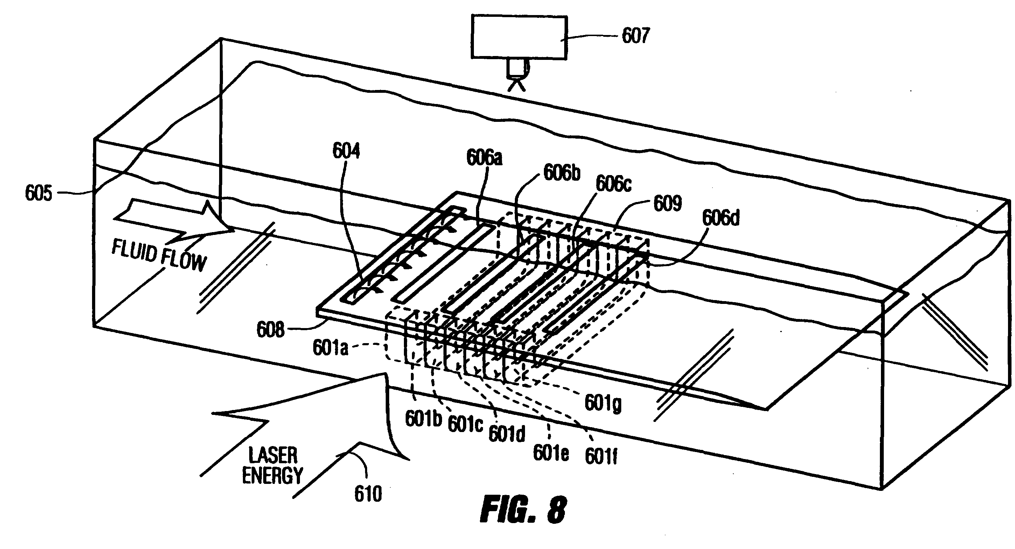

A test rig was set up to perform a feasibility study using the device shown in Fig. 3. The rig was tested in a flow channel in the test setup depicted in Fig. 8. The rig, shown in Fig. 8, consisted of a plate 609 about four meters long, having the components shown in Fig. 3 mounted thereon. The boundary layer control device 608 consisted of seven permanent magnets 601a to 601f. The poles of each magnet were about 18 cm. apart, that is, the control region was 18 cm. wide in the spanwise direction. Stainless steel (Type 304) electrodes 606a, 606b, 606c and 606d were provided approximately 8 cm. apart. They were approximately 1 cm. wide and 8 cm. long.

Anode and cathode voltage were established for each test run. The electrode 606a was maintained at the anode voltage and the 606d was maintained at the cathode voltage. The electrodes 606b and 606c were alternately switched between the anode and cathode voltages by a control unit (not shown in Fig. 8). The three control region tiles were sequentially actuated for 100 msec. each (with a duty cycle of 1/3). $B_z$ for each tile was about 160 gauss and $J_x$ for each tile was about 10 ma/cm$^2$.

Various electrolytic substances were injected into the flow medium from a slot 604. The electrolytic substance consisted of a dilute solution of NaOH containing a fluorescing disodium fluorescein dye to obtain flow visualization in a manner discussed below.

The test tank shown in Fig. 8 consisted of a tank approximately 1.5 meters wide, 0.5 meters high and six meters long. The test fluid 605 was set to flow at 15 cm/sec. A laser was arranged to provide a thin sheet of laser energy 610 along the boundary layer at $y^+ \approx 20$ for activating the fluorescing dye in a thin layer along the surface of the plate to obtain visualization of the boundary layer. A video recorder 607 was provided for recording the results of the experiment.

In experiments performed on the test rig, a turbulent spot was produced upstream of the magnetic boundary layer control device 608 using a mechanical tripping device. It was observed that when the spot entered the control region of the device, turbulence in the boundary layer of plate 609 disappeared under the above conditions. The flow visualization techniques also confirmed qualitatively that reversing the flow of current increased the turbulence in the control region.

It will be appreciated that magnetic boundary layer control devices such as discussed above could be provided on any surface upon which it is desired to control the boundary layer, either to prevent or cause separation, or to remove or induce instability.

The present invention provides a device that is simple to manufacture as discrete elements and which could be easily retrofit to craft presently in operation. Accordingly, the magnetic boundary layer control devices could be easily manufactured in large volume and delivered to a site of operation of the craft upon which it is to be installed. The devices could be easily fitted on the inside skin of the craft, for example on a submarine sail, with a minimum amount of time and effort.

Preliminary studies indicate that the power requirements for operational boundary layer control devices would be extremely low. In addition, with the breakthroughs presently taking place with superconductivity, it may be possible to significantly reduce the power requirements of devices incorporating the present invention by the use of superconducting electromagnets.

Of course, it will be appreciated that the invention may take forms other than those specifically described, and the scope of the invention is to be determined solely by the following claims.

**Claims**

1. An apparatus for controlling a boundary layer in a flow of a fluid having a predetermined electrical conductivity and moving relative to a surface (100), said surface comprising for example a lifting surface, for example in the form of a control surface, said apparatus comprising:

   a plurality of selectively actuable control region tiles (206) distributable over the surface, each said tile (206) being bounded by magnetic field generating means (101, 102) for generating in the near-wall region of the fluid a magnetic field $\overline{B}$ (x,y,z,t) having flux lines with a predetermined orientation with respect to the direction of relative movement of the fluid and the surface and electric current generating means (105, 106, 107) for generating in the fluid in the near-wall region an electric current density $\overline{J}$ (x,y,z,t) traversing the magnetic flux lines wherein said magnetic field generating means (101, 102) and said electric current generating means (105, 106, 107) are disposed relative to each other such that actuation of a particular tile generates a magnetic field $\overline{B}$ and electric current density $\overline{J}$ that create force $\overline{L}$ (x, y, z, t) = $\overline{J}$ X $\overline{B}$ in the near-wall region of the flow and having a component normal to the surface; and
   control means for selectively actuating said tiles to create the force $\overline{L}$ in the flow along selected said tiles for controlling the flow.

2. An apparatus as claimed in claim 1 and further including conductivity altering means (108, 208) for providing an electrical conductivity gradient in a near-wall region of the flow proximate to the surface;

3. An apparatus according to claim 1 or claim 2 wherein the electric current density $\overline{J}$ is spatially constant for an actuated tile.

4. An apparatus according to claim 3 wherein the magnetic field $\overline{B}$ is spatially constant for an actuated tile.

5. An apparatus according to any one of claims 1 to 4, wherein the component of the force $\overline{J}$ X $\overline{B}$ normal to the surface is in a direction toward the surface for stabilising the boundary layer.

6. An apparatus according to claim 5, wherein the force $\overline{J}$ X $\overline{B}$ reduces the shear stress in the fluid at the surface.

7. An apparatus according to claim 5 or claim 6, wherein the force $\overline{J}$ X $\overline{B}$ maintains attached flow over the surface.

8. An apparatus according to any one of claims 1 to 7, wherein the component of the force $\overline{J}$ X $\overline{B}$ normal to the surface of the wall is in a direction away from the surface for destabilising the boundary layer.

9. An apparatus according to claim 8, wherein the force $\overline{J}$ X $\overline{B}$ induces turbulent fluid flow in the boundary layer.

10. An apparatus according to claim 8 or 9, wherein the force $\overline{J}$ X $\overline{B}$ induces the boundary layer to separate from the surface.

11. An apparatus according to any one of the preceding claims, wherein said magnetic field generating means (101, 102) and electric current generating means (105, 106, 107) generate a magnetic field having flux lines perpendicular to the electric current.

12. An apparatus according to any one of claims 2 to 11, wherein the fluid is liquid and said conductivity altering means (108, 208) comprises means for bleeding an electrolyte into the near-wall region of the flow.

13. An apparatus according to any one of the preceding claims, wherein the fluid is a gas and said conductivity altering means (108, 208) includes means for increasing the concentration of ions in the gas in the near-wall region of the flow.

14. An apparatus according to any one of the preceding claims, wherein said electric current generating means (106, 107) comprises at least one pair of electrodes (106, 107) disposed with the flux lines of the magnetic field between said electrodes.

15. An apparatus according to any one of the preceding claims, wherein said magnetic field generating means (101, 102) comprises at least one permanent magnet.

16. An apparatus according to any one of the preceding claims, wherein said magnetic field generating means (101, 102) comprises at least one electromagnet.

17. An apparatus according to any one of the preceding claims, further comprising modulating means for varying at least one of the density and orientation of at least one of the magnetic field $\overline{B}$ and electric current density $\overline{J}$.

18. An apparatus according to any one of the preceding claims, further comprising plural said magnetic field generating means (101, 102) and plural said electric current generating means (106, 107) bounding said tiles in a two-dimensional array thereof.

**Patentansprüche**

1. Gerät zum Steuern einer Grenzschicht in einem Strom eines Fluids, das eine vorbestimmte elektrische Leitfähigkeit aufweist und sich in bezug auf eine Oberfläche bewegt, die z.B. eine Hubfläche beispielsweise in Form einer Steuerfläche aufweist, wobei das Gerät umfaßt:

   eine Mehrzahl von selektiv erregbaren Zellen (206) von Steuerzonen, die über die Oberfläche verteilt werden können, wobei jede Zelle (206) begrenzt ist von einer ein Magnetfeld erzeugenden Einrichtung (101, 102), um in der wandnahen Zone des Fluids ein Magnetfeld $\overline{B}$ (x, y, z, t) mit Flußlinien mit einer vorbestimmten Orientierung bezüglich der Richtung einer relativen Bewegung des Fluids und der Oberfläche zu erzeugen, und einer einen elektrischen Strom erzeugenden Einrichtung (105, 106, 107), um in dem Fluid in der wandnahen Zone eine elektrische Stromdichte $\overline{J}$ (x, y, z, t) zu erzeugen, die die Magnetflußlinien kreuzt, worin die ein Magnetfeld erzeugende Einrichtung (102, 102) und die einen elektrischen Strom erzeugende Einrichtung (105, 106, 107) in bezug aufeinander so angeordnet sind, daß eine Erregung einer bestimmten Zelle ein Magnetfeld $\overline{B}$ und eine elektrische Stromdichte $\overline{J}$ erzeugt, die eine Kraft $\overline{L}$ (x, y, z, t) = $\overline{J}$ x $\overline{B}$ in der wandnahen Zone des Stromes mit einer zur Oberfläche normalen Komponente erzeugen; und
   eine Steuereinrichtung zum selektiven Erregen der Zellen, um die Kraft $\overline{L}$ in dem Strom entlang den ausgewählten Zellen zum Steuern des Stroms zu erzeugen.

2. Gerät nach Anspruch 1, ferner enthaltend eine die Leitfähigkeit ändernde Einrichtung (108, 208) zum Vorsehen eines Gradienten der elektrischen Leitfähigkeit in einer wandnahen Zone des Stroms, die nahe der Oberfläche liegt.

3. Gerät nach Anspruch 1 oder Anspruch 2, worin die elektrische Stromdichte $\overline{J}$ für eine erregte Zelle räumlich konstant ist.

4. Gerät nach Anspruch 3, worin das Magnetfeld $\overline{B}$ für eine erregte Zelle räumlich konstant ist.

5. Gerät nach einem der Ansprüche 1 bis 4, worin die zur Oberfläche normale Komponente der Kraft $\overline{J}$ x $\overline{B}$ in einer Richtung zur Oberfläche zum Stabilisieren der Grenzschicht liegt.

6. Gerät nach Anspruch 5, worin die Kraft $\overline{J}$ x $\overline{B}$ die Scherspannung in dem Fluid an der Oberfläche reduziert.

7. Gerät nach Anspruch 5 oder Anspruch 6, worin die Kraft $\overline{J}$ x $\overline{B}$ einen anliegenden Strom über der Oberfläche aufrechterhält.

8. Gerät nach einem der Ansprüche 1 bis 7, worin die zur Oberfläche der Wand normale Komponente der Kraft $\overline{J}$ x $\overline{B}$ in einer Richtung weg von der Oberfläche liegt, um die Grenzschicht zu destabilisieren.

9. Gerät nach Anspruch 8, worin die Kraft $\overline{J}$ x $\overline{B}$ einen turbulenten Fluidstrom in der Grenzschicht induziert.

10. Gerät nach Anspruch 8 oder 9, worin die Kraft $\overline{J}$ x $\overline{B}$ dazu führt, daß sich die Grenzschicht von der Oberfläche trennt.

11. Gerät nach einem der vorhergehenden Ansprüche, worin die ein Magnetfeld erzeugende Einrichtung (101, 102) und die einen elektrischen Strom erzeugende Einrichtung (105, 106, 107) ein Magnetfeld erzeugen, das zum elektrischen Strom senkrechte Flußlinien aufweist.

12. Gerät nach einem der Ansprüche 2 bis 11, worin das Fluid eine Flüssigkeit ist und die eine Leitfähigkeit ändernde Einrichtung (108, 208) eine Einrichtung zum Einleiten eines Elektrolyten in die wandnahe Zone des Stroms aufweist.

13. Gerät nach einem der vorhergehende Ansprüche, worin das Fluid ein Gas ist und die eine Leitfähigkeit ändernde Einrichtung (108, 208) eine Einrichtung zum Erhöhen der Konzentration von Ionen im Gas in der wandnahen Zone des Stromes enthält.

14. Gerät nach einem der vorhergehenden Ansprüche, worin die einen elektrischen Strom erzeugende Einrichtung (106, 107) mindestens ein Paar Elektroden (106, 107) aufweist, die mit den Flußlinien des Magnetfeldes zwischen den Elektroden angeordnet sind.

15. Gerät nach einem der vorhergehenden Ansprüche, worin die ein Magnetfeld erzeugende Einrichtung (101, 102) zumindest einen Permanentmagneten aufweist.

**16.** Gerät nach einem der vorhergehenden Ansprüche, worin die ein Magnetfeld erzeugende Einrichtung (101, 102) zumindest einen Elektromagneten aufweist.

**17.** Gerät nach einem der vorhergehenden Ansprüche, ferner mit einer Moduliereinrichtung zum Variieren der Dichte und/oder Orientierung des Magnetfeldes $\vec{B}$ und/oder der elektrischen Stromdichte $\vec{J}$.

**18.** Gerät nach einem der vorhergehenden Ansprüche, ferner mit mehreren, ein Magnetfeld erzeugenden Einrichtungen (101, 102) und mehreren, einen elektrischen Strom erzeugenden Einrichtungen (106, 107), die die Zellen in ihrer zweidimensionaler Anordnung begrenzen.

**Revendications**

**1.** Dispositif pour contrôler une couche limite au sein d'un écoulement de fluide possédant une conductivité électrique prédéterminée et se déplaçant par rapport à une surface, ladite surface comprenant, par exemple, une surface de sustentation, se présentant par exemple sous la forme d'une surface de gouverne, ledit dispositif comportant :

une pluralité de tuiles (206) définissant une zone de gouverne, pouvant être activées d'une manière sélective, que l'on peut répartir sur la surface, chaque tuile (206) étant délimitée par des moyens générateurs de champ magnétique (101, 102) pour générer dans l'écoulement du fluide, au voisinage de la paroi, un champ magnétique $\vec{B}(x, y, z, t)$ possédant des lignes de flux dont l'orientation est prédéterminée par rapport au sens de déplacement relatif du fluide et à la surface et par des moyens générateurs de courant électrique (105, 106, 107) pour générer dans le fluide, au voisinage de la paroi, une densité de courant électrique $\vec{J}$ (x, y, z, t) traversant les lignes de flux magnétique, lesdits moyens générateurs de champ magnétique (101, 102) et lesdits moyens générateurs de courant électrique (105, 106, 107) étant disposés les uns par rapport aux autres de manière à ce que l'activation d'une tuile particulière génère un champ magnétique $\vec{B}$ et une densité de courant électrique $\vec{J}$ qui créent une force $\vec{L}$ (x, y, z, t) = $\vec{J} \wedge \vec{B}$ dans la zone de l'écoulement voisine de la paroi, force possédant une composante perpendiculaire à la surface ; et
des moyens de commande pour activer d'une manière sélective lesdites tuiles afin de créer la force $\vec{L}$ au sein de l'écoulement le long desdites tuiles sélectionnées de manière à contrôler l'écoulement.

**2.** Dispositif selon la revendication 1 et incluant en outre des moyens de modification de la conductivité (108, 208) pour créer un gradient de conductivité électrique dans une zone de l'écoulement voisine de la paroi à proximité de la surface.

**3.** Dispositif selon la revendication 1 ou la revendication 2, dans lequel la densité de courant électrique $\vec{J}$ est spatialement constante pour une tuile activée.

**4.** Dispositif selon la revendication 3, dans lequel le champ magnétique $\vec{B}$ est spatialement constant pour une tuile activée.

**5.** Dispositif selon l'une quelconque des revendications 1 à 4, dans lequel la composante de la force $\vec{J} \wedge \vec{B}$ perpendiculaire à la surface est dirigée vers la surface de manière à stabiliser la couche limite.

**6.** Dispositif selon la revendication 5, dans lequel la force $\vec{J} \wedge \vec{B}$ réduit la contrainte de cisaillement au sein du fluide au niveau de la surface.

**7.** Dispositif selon la revendication 5 ou la revendication 6, dans lequel la force $\vec{J} \wedge \vec{B}$ maintient l'écoulement collé à la surface.

**8.** Dispositif selon l'une quelconque des revendications 1 à 7, dans lequel la composante de la force $\vec{J} \wedge \vec{B}$, perpendiculaire à la surface de la paroi est dirigée à l'opposé de la surface de manière à déstabiliser la couche limite.

**9.** Dispositif selon la revendication 8, dans lequel la force $\vec{J} \wedge \vec{B}$ induit un écoulement de fluide turbulent dans la couche limite.

**10.** Dispositif selon la revendication 8 ou 9, dans lequel la force $\vec{J} \wedge \vec{B}$ induit une séparation entre la couche limite et la surface.

**11.** Dispositif selon l'une quelconque des revendications précédentes, dans lequel lesdits moyens générateurs de champ magnétique (101, 102) et lesdits moyens générateurs de courant électrique (105, 106, 107) génèrent un champ magnétique possédant des lignes de flux perpendiculaires au courant électrique.

**12.** Dispositif selon l'une quelconque des revendications 2 à 11, dans lequel le fluide est un liquide et lesdits moyens de modification de la conductivité (108, 208) comprennent des moyens pour introduire un électrolyte dans la zone de l'écoulement voisine de la paroi.

**13.** Dispositif selon l'une quelconque des revendications précédentes, dans lequel le fluide est un gaz et lesdits moyens de modification de la conductivité (108, 208) incluent des moyens pour augmenter la concentration en ions au sein du gaz dans la zone de l'écoulement voisine de la paroi.

**14.** Dispositif selon l'une quelconque des revendications précédentes, dans lequel lesdits moyens générateurs de courant électrique (106, 107) comprennent au moins une paire d'électrodes (106, 107) disposées de manière à ce que les lignes de flux du champ magnétique se situent entre lesdites électrodes.

**15.** Dispositif selon l'une quelconque des revendications précédentes, dans lequel lesdits moyens générateurs de champ magnétique (101, 102) comprennent au moins un aimant permanent.

**16.** Dispositif selon l'une quelconque des revendications précédentes, dans lequel lesdits moyens générateurs de champ magnétique (101, 102) comprennent au moins un électroaimant.

**17.** Dispositif selon l'une quelconque des revendications précédentes, comportant en outre des moyens de modulation pour faire varier au moins l'une parmi la densité et l'orientation d'au moins l'un parmi le champ magnétique $\vec{B}$ et la densité de courant électrique $\vec{J}$.

**18.** Dispositif selon l'une quelconque des revendications précédentes, comportant en outre une pluralité desdits moyens générateurs de champ magnétique (101, 102) et une pluralité desdits moyens générateurs de courant électrique (106, 107) entourant lesdites tuiles en formant un réseau bidimensionnel.

**FIG. 1(a)**
**PRIOR ART**

**FIG. 1(b)**
**PRIOR ART**

**FIG. 2(a)**
**PRIOR ART**

**FIG. 2(b)**
**PRIOR ART**

**FIG. 2(c)**
**PRIOR ART**

**FIG. 3(a)**

**FIG. 3(b)**

FIG. 4

FIG. 5

FIG. 6

EP 0 664 757 B1

**FIG. 7**

**FIG. 8**

607

605

604  606a  606b  606c  609  606d

FLUID FLOW

608

601a

601b 601c 601d  601e 601f  601g

LASER
ENERGY

610

EP 0 664 757 B1